(19) Europäisches Patentamt
European Patent Office
Office européen des brevets

(11) **EP 3 182 159 B1**

(12) **EUROPÄISCHE PATENTSCHRIFT**

(45) Veröffentlichungstag und Bekanntmachung des Hinweises auf die Patenterteilung:
**26.09.2018 Patentblatt 2018/39**

(51) Int Cl.:
*G01S 17/42* (2006.01)          *G01S 17/89* (2006.01)
*G01S 17/10* (2006.01)          *G01S 7/497* (2006.01)
*G01S 7/481* (2006.01)

(21) Anmeldenummer: **15200030.3**

(22) Anmeldetag: **15.12.2015**

(54) **VORRICHTUNG ZUR ENTFERNUNGSMESSUNG**

DISTANCE MEASURING DEVICE

DISPOSITIF TELEMETRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.06.2017 Patentblatt 2017/25**

(73) Patentinhaber: **Riegl Laser Measurement Systems GmbH**
**3580 Horn (AT)**

(72) Erfinder:
• **HOFBAUER, Andreas**
**3910 Zwettl (AT)**
• **RIEGER, Peter**
**3824 Grossau (AT)**
• **REICHERT, Rainer**
**3580 Horn (AT)**
• **ULLRICH, Andreas**
**3003 Gablitz (AT)**

(74) Vertreter: **Weiser, Andreas**
**Patentanwalt**
**Kopfgasse 7**
**1130 Wien (AT)**

(56) Entgegenhaltungen:
**EP-A1- 2 789 972     DE-A1- 19 936 847**

**Beschreibung**

Die vorliegende Erfindung betrifft eine Vorrichtung zur Entfernungsmessung eines Ziels durch Laufzeitmessung von daran reflektierten Laserimpulsen, umfassend:

einen Lasersender zum Aussenden eines Laserimpulses zu einem Sendezeitpunkt in Form eines Sende-Laserstrahls;
einen Laserempfänger zum Empfangen des am Ziel reflektierten Laserimpulses zu einem Empfangszeitpunkt in Form eines Empfangs-Laserstrahls auf einer Empfangsfläche des Laserempfängers;
eine dem Lasersender nach- und dem Laserempfänger vorgeordnete Strahlablenkeinrichtung, die die Sende- und Empfangs-Laserstrahlen mit einer bekannten Winkelgeschwindigkeit ablenkt; und
eine an den Lasersender und den Laserempfänger angeschlossene Auswerteeinrichtung zum Messen der Laufzeit zwischen Sende- und Empfangszeitpunkt und daraus der Entfernung des Ziels.

Vorrichtungen dieser Art werden beispielsweise bei der luftgestützten Vermessung von Landschaften verwendet. Von einem Laserscanner an Bord eines Flugzeugs wird aus großer Flughöhe eine Vielzahl von Laserimpulsen mittels der Strahlablenkeinrichtung auf viele Zielpunkte am Boden ausgesandt, und aus Laufzeitmessungen der Zielreflexionen werden die Zielentfernungen und daraus - in Kenntnis der Position und Lage des Laserscanners und des jeweiligen Ablenkwinkels - ein Punktemodell ("3D-Punktewolke") der Landschaft erstellt. Staub, Luftfeuchtigkeit oder Wolken können dabei Störreflexionen verursachen, welche die Erstellung des Landschaftsmodells erschweren oder dieses verfälschen. Umgekehrt kann es bei der Vermessung von Wolken oder Staub, z.B. Aschewolken, gerade wünschenswert sein, diese schwachen Wolkenreflexionen vor dem Hintergrund der starken Bodenreflexionen zu erfassen.

Die Erfindung setzt sich zum Ziel, eine Laserscanvorrichtung zu schaffen, welche diese unterschiedlichen Messanforderungen besser bewältigen kann als die bekannten Lösungen.

Dieses Ziel wird mit einer Vorrichtung der einleitend genannten Art erreicht, welche sich gemäß der Erfindung durch eine Auswahleinrichtung auszeichnet, die dafür ausgebildet ist, die für die Messung verwendete Empfangsfläche des Laserempfängers in Abhängigkeit der Winkelgeschwindigkeit der Strahlablenkeinrichtung und eines vorgegebenen Bereichs von messbaren Entfernungen auszuwählen.

Während der Laufzeit des Laserimpulses vom Lasersender zum Laserempfänger bewegt sich die Strahlablenkeinrichtung weiter, und so unterliegt der Auftreffpunkt des Empfangs-Laserstrahls auf der Empfangsfläche des Laserempfängers einem Querversatz, der proportional dem Produkt aus Impulslaufzeit und Winkelgeschwindigkeit der Strahlablenkeinrichtung ist. Da die Impulslaufzeit wiederum von der Zielentfernung abhängig ist, kann durch Auswahl der für die Messung verwendeten Empfangsfläche der Entfernungsmessbereich der Vorrichtung eingestellt werden. Auf diese Weise können z.B. unerwünschte Entfernungsbereiche ausgeblendet werden, beispielsweise um Störreflexionen von Staub, Luftfeuchtigkeit oder Wolken zu unterdrücken, oder um umgekehrt schwache Nutzreflexionen vor dem Hintergrund starker Störreflexionen zu isolieren, beispielsweise zur luftgestützten Wolkenvermessung.

Der durch die Auswahleinrichtung ausgewählte Entfernungsmessbereich der Laserscanvorrichtung kann sowohl vor als auch während der Durchführung der Messaufgabe eingestellt werden; im laufenden Messbetrieb kann er dadurch an sich ändernde atmosphärische Bedingungen oder die jeweilige Umgebung angepasst werden, beispielsweise bei Änderungen der Flughöhe oder bei Terrainsprüngen. In manchen Ausführungsformen, die später noch näher erläutert werden, kann der Entfernungsmessbereich sogar auch noch nachträglich, nach Durchführung der Messaufgabe, eingestellt werden, um z.B. unerwünschte Störsignale zu unterdrücken.

Die erfindungsgemäße Auswahleinrichtung erreicht durch die Möglichkeit der entfernungsselektiven Ausblendung von Störreflexionen bzw. entfernungsselektiven Hervorhebung von Nutzreflexionen noch zahlreiche weitere Vorteile:

- Nach Ausblendung entfernungsbezogener Störreflexionen können verbleibende Störsignale im Messsignal des Laserempfängers einfacher klassifiziert und behandelt werden, beispielsweise als Nahreflexionen aus dem Bereich des Gehäuses der Laserscanvorrichtung oder als Doppelreflexionen von bodennahem Blattwerk od.dgl.
- Durch die Ausblendung störender Wolkenreflexionen können Messflugzeuge mit der erfindungsgemäßen Laserscanvorrichtung auch bei schlechteren Wetterbedingungen noch nutzbringend eingesetzt werden, was eine höhere Auslastung der Geräte ermöglicht.
- Durch die Unterdrückung von allenfalls auch großen Störreflexionen gegenüber schwächeren Nutzreflexionen kann der Laserempfänger ohne Übersteuerung bzw. Sättigung mit maximal möglicher Empfindlichkeit betrieben werden, wodurch auch höhere Zielentfernungen mit einer unveränderten Störsignalrate vermessen werden können.
- Umgekehrt können auch höhere Laserleistungen des Lasersenders eingesetzt werden, ohne zu großen Störreflexionen und damit Sättigungen oder Übersteuerungen des Laserempfängers zu führen, und damit höhere Zielentfernungen bei gleichbleibend geringer Störsignalrate vermessen werden.

- Bei einer hohen Impulswiederholrate (pulse repetition rate, PRR) des Lasersenders können bei größeren Zielentfernungen mehrere Laserimpulse in der Luft sein ("multiple pulses in the air", MPIA, bzw. "multiple time around", MTA), d.h. bereits der nächste (oder übernächste usw.) Laserimpuls ausgesandt werden, noch bevor der erste Laserimpuls im Laserempfänger rückempfangen wird. In diesem Fall ist die Zuordnung eines empfangenen Laserimpulses zu dem richtigen, ursächlichen Sendeimpuls uneindeutig bzw. schwierig, was auch als MPIA- bzw. MTA-Problem bekannt ist. Die Größe eines eindeutig zuordenbaren Entfernungsmessbereichs, einer sog. "MTA-Zone", ist dabei durch den Impulsabstand der Sendeimpulse bestimmt; jede mögliche Zuordnung eines Empfangsimpulses zu einem vorangegangenen Sendeimpuls entspricht dabei jeweils einer bestimmten MTA-Zone. Durch entsprechende Einstellung der erfindungsgemäßer Auswahleinrichtung kann somit auch jene MTA-Zone ausgewählt werden, in welcher die Messung durchgeführt werden soll.

- Bei Verwendung mehrerer erfindungsgemäßer Laserscanvorrichtung auf einer gemeinsamen Messplattform, z.B. einem Flugzeug, können mit Hilfe der Erfindung die Entfernungsmessbereiche der einzelnen Vorrichtungen unterschiedlich gewählt und insbesondere so eingestellt werden, dass gegenseitige Störungen der Vorrichtungen unterdrückt oder minimiert werden.

Gemäß einem bevorzugten Merkmal der Erfindung ist im Strahlengang zwischen Strahlablenkeinrichtung und der Auswahleinrichtung eine Sammel-Optik vorgesehen, welche den Empfangs-Laserstrahl in einem Punkt fokussieren kann, u.zw. entweder in der Ebene der Auswahleinrichtung oder der Empfangsfläche. Dadurch können die Grenzen des ausgewählten Entfernungsmessbereichs sehr genau eingestellt werden.

Die Auswahleinrichtung kann auf verschiedene Arten realisiert werden. In einer ersten Ausführungsform umfasst die Auswahleinrichtung eine vor dem Laserempfänger liegende Blende, welche dessen Empfangsfläche einschränkt. Mit anderen Worten ist die Empfangsfläche des Laserempfängers hier so groß, dass sie durch eine davor liegende Blende in ihrer geometrischen Ausdehnung bzw. Fläche eingeschränkt werden kann.

Die Blende kann eine einzige oder sogar mehrere Blendenöffnungen haben, um mehrere voneinander beabstandete "aktive" Bereiche auf der Empfangsfläche des Laserempfängers abzugrenzen. Jede Blendenöffnung gibt einen Entfernungsmessbereich der Laserscanvorrichtung vor.

Die Blende kann eine "feste" Blende sein, d.h. mit einer (oder mehreren) vorgegebenen Blendenöffnung(en), und ist dann beispielsweise mittels eines Antriebs relativ zum Laserempfänger bewegbar, um den Entfernungsmessbereich einzustellen.

Die Blende kann alternativ auch eine "bewegliche" Blende sein, z.B. eine Lamellenblende wie bei einem Fotoapparat, und dann vom Antrieb gesteuerte Lamellen aufweisen.

In einer weiteren Variante kann die Blende in der Art eines "Revolverobjektivs" eine vom Antrieb drehbare Scheibe mit verschieden großen und/oder verschieden platzierten Blendenöffnungen aufweisen, welche jeweils vor der Empfangsfläche des Laserempfängers in Stellung gebracht werden können.

Gemäß einem weiteren Merkmal der Erfindung kann anstelle einer mechanischen Blende auch eine elektro-optische Blende verwendet werden. Die Blende weist dann ein elektro-optisches Element auf, dessen optische Transparenz bzw. Opazität durch elektrische Steuerung verändert werden kann. Die Veränderung der Transparenz bzw. Opazität kann dabei global für das gesamte Element oder lokal für kleine Segmente (Pixel) desselben erfolgen, wodurch auch sehr komplexe Blendenöffnungen, z.B. mit unregelmäßiger Umfangsform und/oder mehreren voneinander beabstandeten Blendenöffnungen, realisiert werden können. Eine praktische Ausführungsform eines solchen elektro-optischen Elements ist beispielsweise ein LCD-Panel, dessen Transparenz bzw. Opazität pixelweise elektronisch steuerbar ist.

In jeder der vorgenannten Blendenvarianten kann die Blende entweder als "Schwarzblende" mit (zumindest) einer Blendenöffnung ausgeführt sein, d.h. im Bereich einer Blendenöffnung ist sie zu 100% transmissiv und neben der Blendenöffnung 0% transmissiv (100% opak, "schwarz"), oder aber die Blende ist ein Abschwächfilter mit (zumindest) zwei Bereichen unterschiedlicher Opazität bzw. Transparenz. Eine solche Blende kann einen Transmissions-, Opazitätsbzw. Abschwächungsverlauf über der Empfangsfläche des Laserempfängers errichten, welcher die Empfangs-Laserimpulse somit entfernungsselektiv abschwächt. Damit können beispielsweise die Signalamplituden der Laserimpulse von Nah- und Fernzielen aneinander angeglichen werden, oder aber der Amplitudenkontrast der Laserimpulse von Nah- und Fernzielen verstärkt werden, um sie leichter voneinander unterscheidbar zu machen. Auch alle diese Ausführungsformen einer "weichen", verlaufenden Einschränkung der Empfangsfläche des Laserempfängers fallen unter den hier verwendeten Begriff der "Auswahl der für die Messung verwendeten Empfangsfläche" des Laserempfängers.

Gemäß einer zweiten Ausführungsform der erfindungsgemäßen Auswahleinrichtung wird die für die Messung verwendete Empfangsfläche des Laserempfängers dadurch ausgewählt, dass der Laserempfänger mitsamt seiner Empfangsfläche relativ zum Empfangs-Laserstrahl bewegbar ist. Mit anderen Worten ist hier die Empfangsfläche des Laserempfängers kleiner als jener Versatz bzw. Winkelbereich, der vom Empfangs-Laserstrahl nach seiner Ablenkung durch die Ablenkeinrichtung überstrichen werden kann. Nur bei Einstellung des "richtigen" Versatzes zwischen Empfangs-Laserstrahl und Laserempfänger wird dessen Empfangsfläche "getroffen" und damit der solcherart eingestellte, gewünschte Entfernungsmessbereich vermessen.

Die Einstellung der Empfangsfläche relativ zum Empfangs-Laserstrahl kann auf zweierlei Arten erreicht werden, und zwar einerseits, indem die Auswahleinrichtung eine vor der Empfangsfläche des Laserempfängers liegende weitere Strahlablenkeinrichtung umfasst, welche den Empfangs-Laserstrahl selektiv so ablenkt, dass die Empfangsfläche des Laserempfängers nur im ausgewählten Entfernungsmessbereich getroffen wird; oder andererseits, indem die Auswahleinrichtung einen Antrieb umfasst, mittels welchem der Laserempfänger etwa parallel zu seiner Empfangsfläche bewegbar ist. Auch dadurch wird die Empfangsfläche des Laserempfängers wiederum nur im gewünschten Entfernungsmessbereich vom Empfangs-Laserstrahl getroffen.

In einer dritten Ausführungsform der erfindungsgemäßen Auswahleinrichtung wird die für die Messung verwendeten Empfangsfläche des Laserempfängers dadurch ausgewählt, dass die Empfangsfläche des Laserempfängers in eine Vielzahl von lichtempfindlichen Detektorelementen unterteilt und die Auswahleinrichtung dafür ausgebildet ist, ein oder mehrere Detektorelemente für die Messung auszuwählen. Die Auswahl des jeweiligen Detektorelements der Empfangsfläche kann hier sowohl vor, während als auch erst nach dem Messvorgang erfolgen. Aus den parallelen Messsignalen der Detektorelemente können - bei entsprechender paralleler Aufzeichnung in einem Speicher - die dem gewünschten Entfernungsmessbereich entsprechenden Detektorelemente bzw. Messsignale auch noch nach der Messung ("offline") ausgewählt werden, um den Entfernungsmessbereich festzulegen.

Eine solche aus vielen einzelnen Detektorelementen aufgebaute Auswahleinrichtung eröffnet überdies weitere Möglichkeiten. Zum einen können Ziele in zwei oder mehr unterschiedlichen, voneinander beabstandeten Entfernungsmessbereichen vermessen werden, wie bei einer Blende mit zwei oder mehr Blendenöffnungen. Zum anderen können mehrere von einem einzigen Laserimpuls in unterschiedlichen Entfernungen getroffene Ziele besser voneinander unterschieden werden, um sie gleichzeitig zu messen ("Mehrzielfähigkeit"). Beispielsweise können damit Wolken und Terrain in einem einzigen Laserscanvorgang gleichzeitig vermessen werden: Die von nahen Wolken herrührenden Reflexionen treffen unter einem kleinen Versatz auf der Empfangsfläche des Laserempfängers auf, und die vom fernen Boden herrührenden Reflexionen unter einem großen Versatz. Werden nun verschiedene Detektorelemente für die beiden Versatz- und damit Entfernungsmessbereiche ausgewählt und ausgewertet, können sowohl Wolkenals auch Bodenreflexionen vermessen werden. Die Information über zwischenliegende Wolkenreflexionen kann in weiterer Folge auch dazu verwendet werden, die Messung der Bodenreflexionen zu verbessern oder korrigieren, beispielsweise um die Atmosphärenabhängigkeit der Lichtgeschwindigkeit oder eine wolkenbedingte Amplitudendämpfung der Bodenreflexionen zu kompensieren.

Gemäß einer weiteren bevorzugten Ausgestaltung der Erfindung ist demgemäß die Auswahleinrichtung dafür ausgebildet, zumindest zwei Detektorelemente auszuwählen, und die Auswerteeinrichtung dafür ausgebildet, eine erste Entfernung aus dem Sendezeitpunkt und einem vom ersten Detektorelement gemessenen ersten Empfangszeitpunkt und eine zweite Entfernung aus dem Sendezeitpunkt und einem vom zweiten Detektorelement gemessenen zweiten Empfangszeitpunkt zu messen.

Die genannten Detektorelemente der Empfangsfläche des Laserempfängers können im einfachsten Fall nur in einer Richtung über die Empfangsfläche des Laserempfängers verteilt sein, und zwar der erwarteten Versatzrichtung des Empfangs-Laserstrahls. Dies ergibt ein eindimensionales Array von Detektorelementen auf der Empfangsfläche.

In einer weiteren Ausführungsform können die Detektorelemente in zwei Richtungen über die Empfangsfläche verteilt sein, so dass sich ein zweidimensionales Array von Detektorelementen zu ergibt. Damit können insbesondere auch beliebig gekrümmte Trajektorien des Auftreffpunktes des Empfangs-Laserstrahls auf der Empfangsflächen, wie sie beispielsweise durch komplexere, zwei- oder mehrachsige Strahlablenkeinrichtungen erzeugt werden, erfasst werden, ohne die Detekorelemente schon bei der Konstruktion der Laserscanvorrichtung entlang einer bestimmten Trajektorie ausrichten zu müssen.

In einer bevorzugten Ausführungsform wird dazu als Laserempfänger eine Time-of-Flight-Kamera (ToF-Kamera) eingesetzt, deren Pixel die Detektorelemente der Empfangsfläche des Laserempfängers bilden. Die Auswahleinrichtung kann so mit Hilfe industriell vorgefertigter Komponenten und einer entsprechenden nachgeschalteten Auswerteelektronik aufgebaut werden.

Wie erörtert kann der durch die Auswahleinrichtung eingestellte Entfernungsmessbereich der Laserscanvorrichtung sowohl vor, während des, als auch nach dem Messvorgang(s) eingestellt werden. Gemäß einer bevorzugten Variante der Erfindung kann dies in jeder Ausführungsform auch in Abhängigkeit zumindest einer zuvor gemessenen Zielentfernung erfolgen. Der bei einer Messung verwendete Entfernungsmessbereich kann so an die Umgebung der vermessenen Ziele adaptiv angepasst bzw. diesen nachgeführt werden, um z.B. Störsignale aus anderen Entfernungsmessbereichen automatisiert auszublenden oder um den Entfernungsmessbereich allmählichen oder sprunghaften Änderungen des Terrains nachzuführen.

Gemäß einem weiteren Merkmal der Erfindung ist dazu bei einer Laserscanvorrichtung mit aufeinanderfolgenden Laserimpulsen, d.h. zumindest einem "ersten" und einem späteren "zweiten", die Auswahleinrichtung dafür ausgebildet, die Empfangsfläche für die Laufzeitmessung des zweiten Laserimpulses auch in Abhängigkeit der Laufzeitmessung des ersten Laserimpulses auszuwählen. Die genannte Abhängigkeit inkludiert auch eine Abhängigkeit von mehr als einer früheren Laufzeitmessung, beispielsweise von einem Durchschnitt mehrerer früherer Messungen.

Die Strahlablenkeinrichtung der Laserscanvorrichtung kann beispielsweise eine rotierende Spiegelpyramide oder ein rotierendes Spiegelfacettenrad sein, in welchem Fall ihre Winkelgeschwindigkeit in der Regel im wesentlichen konstant ist. Im Falle einer solcherart konstanten (z.B. vorgegeben bekannten oder aktuell gemessenen) Winkelgeschwindigkeit ist auch der geometrische Versatz des Auftreffpunktes des Empfangs-Laserstrahls auf der Empfangsfläche des Laserempfängers für eine bestimmte Zielentfernung konstant.

Wenn hingegen eine Strahlablenkeinrichtung mit einer zeitlich veränderliche Winkelgeschwindigkeit verwendet wird, wie es beispielsweise bei einem hin- und herschwingenden Spiegel der Fall ist, dessen Winkelgeschwindigkeit z.B. sinusförmig variiert, dann ist der Versatz des Auftreffpunktes des Empfangs-Laserstrahls auf der Empfangsfläche des Laserempfängers auch von der momentanen Winkelgeschwindigkeit der Strahlablenkeinrichtung abhängig.

Eine weitere Ausführungsform der Erfindung, die sich auch für Strahlablenkeinrichtungen mit zeitlich veränderlicher Winkelgeschwindigkeit eignet, umfasst demgemäß eine Auswahleinrichtung, die zusätzlich auch einen Messwert der Winkelgeschwindigkeit der Strahlablenkeinrichtung erhält und dafür ausgebildet ist, die ausgewählte Empfangsfläche zusätzlich auch an die zeitliche Änderung der Winkelgeschwindigkeit der Strahlablenkeinrichtung anzupassen. Die für die Messung verwendete Empfangsfläche des Laserempfängers "schwingt" dann gleichsam mit der Winkelgeschwindigkeitsänderung der Strahlablenkeinrichtung "mit", um dies zu kompensieren, was wiederum die Einstellung eines konstanten Entfernungsmessbereichs ermöglicht.

Die Erfindung wird nachstehend anhand von in den beigeschlossenen Zeichnungen dargestellten Ausführungsbeispielen näher erläutert. In den Zeichnungen zeigen:

Fig. 1 den Einsatz einer erfindungsgemäßen Vorrichtung an Bord eines Flugzeugs zur Vermessung einer Landschaft mit einigen beispielhaft eingezeichneten Strahlverläufen von Sende- und Empfangs-Laserstrahlen;

Fig. 2 beispielhafte Zeitdiagramme von Sende- und Empfangsimpulsen in der Vorrichtung von Fig. 1;

Fig. 3 die Vorrichtung von Fig. 1 in einem Blockschaltbild mit schematisch eingezeichneten Strahlverläufen;

Fig. 4 eine erste Ausführungsform der Vorrichtung der Erfindung in einem Blockschaltbild mit schematisch eingezeichneten Strahlverläufen;

Fig. 5 die Empfangsfläche des Laserempfängers der Vorrichtung von Fig. 4 in einer Stirnansicht mit eingezeichneten geometrischen Verhältnissen der Auftrefftrajektorie des Empfangs-Laserstrahls;

die Fig. 6a bis 6c drei verschiedene Varianten der Blende der Vorrichtung von Fig. 4 in einer schematischen Seitenansicht (Fig. 6a) bzw. schematischen Stirnansicht (Fig. 6b, 6c);

Fig. 7 eine weitere Variante der Blende der Vorrichtung von Fig. 4 in einer schematischen Seitenansicht mit einigen blockschaltbildlichen Komponenten der Vorrichtung von Fig. 4;

die Fig. 8a und 8b eine alternative Gestaltung der Blende der Fig. 4, 6a - 6c oder 7 in Form eines Abschwächfilters in einer Stirnansicht (Fig. 8a) und in Form eines Diagramms des Opazitätsverlaufs Op über dem Radius r (Fig. 8b);

Fig. 9 eine zweite Ausführungsform der Vorrichtung der Erfindung in einem Blockschaltbild mit schematisch eingezeichneten Strahlverläufen;

Fig. 10 eine Variante der zweiten Ausführungsform von Fig. 9 in einem Blockschaltbild mit schematisch eingezeichneten Strahlverläufen;

Fig. 11 eine dritte Ausführungsform der Vorrichtung der Erfindung in einem Blockschaltbild mit schematisch eingezeichneten Strahlverläufen; und

Fig. 12 eine Variante der Ausführungsform von Fig. 11 in einer Stirnansicht auf die Empfangsfläche des Laserempfängers.

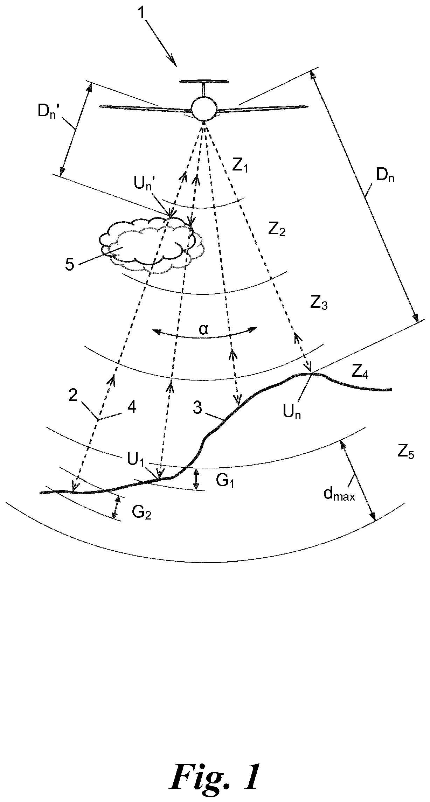

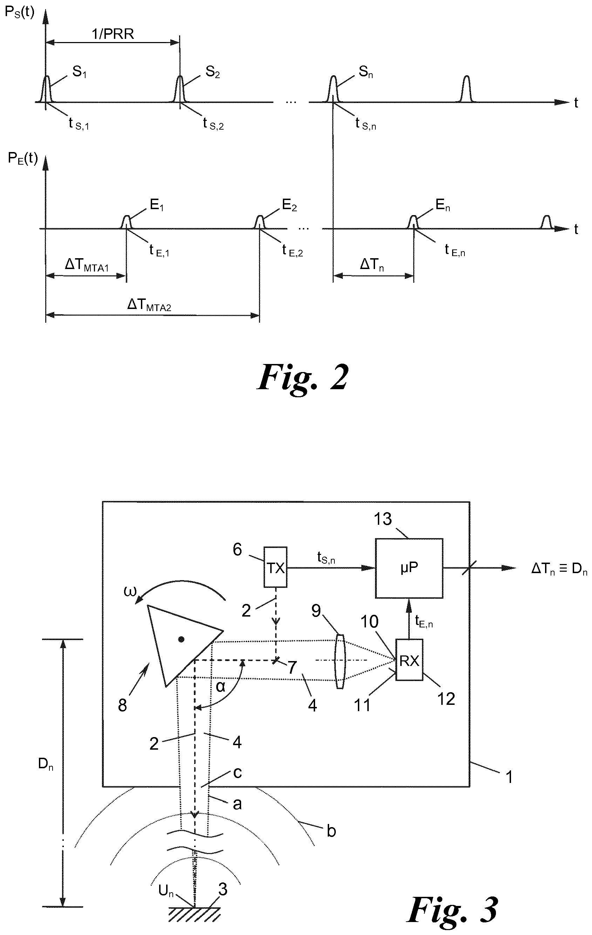

Gemäß den Fig. 1 und 2 wird von einer z.B. flugzeuggestützten Entfernungsmessvorrichtung ("Laserscanner") 1 ein gepulster Sende-Laserstrahl 2 abtastend über ein Terrain 3, z.B. eine Landschaft, einen Geländeverlauf, den Boden einer Tagbaugrube, den Meeresboden, die Skyline einer Stadt usw., mit einzelnen Umgebungszielen (Abtastpunkten) $U_1$, $U_2$,..., allgemein $U_n$, geführt, z.B. zeilenweise fächerförmig. Aus Messungen der Laufzeiten $\Delta T_n$ an den einzelnen im Sende-Laserstrahl 2 enthaltenen Sende-Laserimpulsen $S_1$, $S_2$, ..., allgemein $S_n$, die nach der Zielreflexion als Empfangs-Laserimpulse $E_1$, $E_2$,..., allgemein $E_n$, in Form eines Empfangs-Laserstrahls 4 im Laserscanner 1 zurückerhalten werden, können die Zielentfernungen $D_1$, $D_2$,..., allgemein $D_n$, vom Messort des Laserscanners 1 zu den einzelnen Umgebungszielen $U_n$ bestimmt werden, gemäß der bekannten Beziehung:

$$D_n = c \cdot \Delta T_n/2 = c \cdot (t_{S,n} - t_{E,n})/2, \qquad (1)$$

mit

$t_{S,n}$ ... Sendezeitpunkt des Sende-Laserimpulses $S_n$,

$t_{E,n}$ ... Empfangszeitpunkt des Empfangs-Laserimpulses $E_n$, und

c ......... Lichtgeschwindigkeit.

Auf dem Weg der Sende- und Empfangs-Laserstrahlen 2, 4 können Zwischenziele $U_n'$ liegen, z.B. in Form von Störreflexionen an einer für Laserstrahlen semitransparenten Wolke 5. Für einen Sende-Laserimpuls $S_n$ können daher gegebenenfalls auch zwei oder mehr Empfangs-Laserimpulse $E_n$, $E_n'$ zu verschiedenen Empfangszeitpunkten $t_{E,n}$, $t_{E,n}'$ zurückerhalten werden. Wenn gerade die Vermessung der Wolken 5 von Interesse ist, stellen die Reflexionen an den Zwischenzielen $U_n'$ die Nutzsignale und die Reflexionen an den Bodenzielen $U_n$ die Störsignale dar, und die Ermittlung der Zielentfernungen $D_n'$ zu den Zwischenzielen $U_n'$ ist die Messaufgabe.

Der Laserscanner 1 arbeitet mit einer sehr hohen Impulswiederholrate (pulse repetition rate, PRR) und bestimmt so die Zielentfernungen $D_n$ zu einer Vielzahl von Umgebungszielen $U_n$ in rascher Folge, wodurch eine hohe Zeit- bzw. Ortsauflösung bei kurzer Gesamtmessdauer möglich wird. Ist ein Umgebungsziel $U_n$ vom Laserscanner 1 weiter entfernt als es dem Quotient von Lichtgeschwindigkeit c und doppelter Impulswiederholrate PRR entspricht, so wird der nächste Sendeimpuls $S_{n+1}$ schon ausgesandt, bevor noch die Reflexion $E_n$ des letzten Sendeimpulses $S_n$ empfangen wurde. Dabei können die eintreffenden Empfangsimpulse $E_n$ in der Regel nicht mehr eindeutig ihrem jeweils ursächlichen Sendeimpuls $S_n$ zugeordnet werden (MTA-Problem). In dem Beispiel von Fig. 1 bilden sich auf diese Weise fünf eindeutig vermessbare Entfernungsbereiche ("MTA-Zonen"), $Z_1, Z_2, ..., Z_5$, allgemein $Z_m$, aus, deren Breite jeweils $d_{max} = c/(2 \cdot PRR)$ ist. Beispielsweise ist für die Vermessung eines Ziels wie die Wolkenreflexion $U_n'$ in der zweiten MTA-Zone $Z_2$ die Laufzeit $\Delta T_{MTA2}$ zwischen dem Empfangszeitpunkt $t_{E,2}$ das Empfangs-Laserimpulses $E_2$ und dem Sendezeitpunkt $t_{S,1}$ des vorvorgehenden Sende-Laserimpulses $S_1$ maßgeblich, wie in der linken Hälfte von Fig. 2 skizziert.

Fig. 3 zeigt schematisch den Innenaufbau des Laserscanners 1 von Fig. 1 zur Erzeugung der abtastenden (scannenden) Sende- und Empfangs-Laserstrahlen 2, 4, welche die Sende- und Empfangs-Laserimpulse $S_n$, $E_n$ enthalten. Ein Lasersender 6 sendet den Sende-Laserstrahl 2 über einen Spiegel 7 und eine Strahlablenkeinrichtung 8 auf die Ziele $U_n$ aus. Die Strahlablenkeinrichtung 8 ist beispielsweise eine rotierende Spiegelpyramide, ein rotierendes Spiegelfacettenrad (hier: mit drei Facetten), oder ein rotierender oder hin- und herschwingender Spiegel. Der Ablenkwinkel $\alpha$ des Sende-Laserstrahls 2 ändert sich dadurch mit einer Winkelgeschwindigkeit $\omega$.

Trotz seiner starken Bündelung als Laserstrahl erfährt der Sende-Laserstrahl 2 über die große Entfernung $D_n$ zum Ziel $U_n$ und zurück in der Praxis stets eine gewisse Strahlaufweitung a, so dass der nach der Reflexion am Ziel $U_n$ zurückerhaltene Empfangs-Laserstrahl 4 bei seinem Wiederauftreffen auf der Strahlablenkeinrichtung 8 einen gewissen Strahldurchmesser hat (punktiert dargestellt), welcher nach erneuter Rück-Umlenkung über die Strahlablenkeinrichtung 8 mittels einer Sammel-Optik 9, z.B. einer Sammellinse od.dgl., in einem Auftreffpunkt 10 auf einer Empfangsfläche 11 eines Laserempfängers 12 des Laserscanners 1 fokussiert wird.

Der Strahldurchmesser des Empfangs-Laserstrahls 4 bei seinem Wiederauftreffen auf der Strahlablenkeinrichtung 8 ist in der Regel jedoch nicht nur aufgrund des genannten Bündelungsfehlers a, sondern auch aufgrund der meist diffusen Reflexion am Ziel $U_n$ erweitert, welche zu einer multi- oder omnidirektionalen Reflexion b führt, aus der die Eintrittsapertur c des Laserscanners 1 und/oder die ausnützbare Ablenkfläche der Ablenkeinrichtung 8 und/oder die Sammeloptik 9 den der Empfangsfläche 11 zugeführten Empfangs-Laserstrahl 4 "herausschneidet".

Der Laserempfänger 12 misst den Empfangszeitpunkt $t_{E,n}$ des im Empfangs-Laserstrahl 4 zurückerhaltenen Empfangs-Laserimpulses $E_n$ und führt diesen Messwert einer Auswerteeinrichtung 13 zu. Die Auswerteeinrichtung 13 ist ferner in Kenntnis des Sendezeitpunktes $t_{S,n}$ des ursächlichen Sende-Laserimpulses $S_n$, sei es, dass sie selbst die Aussendung des Sendeimpulses $S_n$ im Lasersender 6 veranlasst hat oder sie einen Messwert des Sendezeitpunkts $t_{S,n}$ erhält. Aus der Differenz $\Delta T_n = t_{E,n} - t_{S,n}$ (unter Berücksichtigung der jeweils korrekten MTA-Zuordnung der Sende- und Empfangs-Laserimpulse entsprechend der richtigen MTA-Zone $Z_m$ gemäß Fig. 2) berechnet die Auswerteeinrichtung 13 anschließend die Zielentfernung $D_n$.

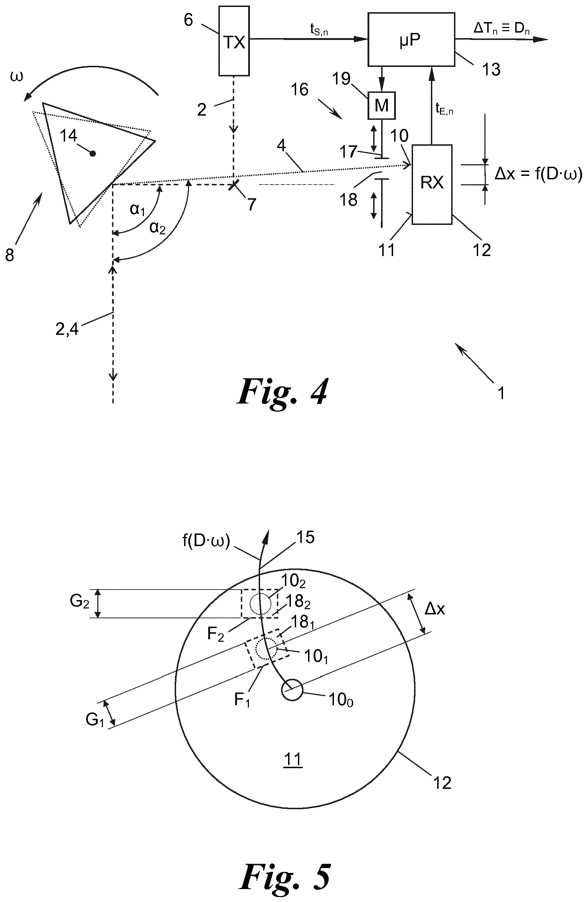

Fig. 4 zeigt eine vereinfachte und vergrößerte Darstellung der Innenkomponenten des Laserscanners 1 der Fig. 1 und 3, wobei der Übersichtlichkeit halber hier die Strahlaufweitung der Sende- und Empfangs-Laserstrahlen 2, 4 und die Sammel-Optik 9 zur Fokussierung im Auftreffpunkt 10 der Empfangsfläche 11 des Empfangs-Laserempfängers 12 nicht mehr dargestellt sind, obwohl vorhanden. Stellvertretend dafür sind nur mehr die optischen Achsen der Sende- und Empfangs-Laserstrahlen 2, 4 dargestellt.

Wie in Fig. 4 veranschaulicht, bewegt sich die Strahlablenkeinrichtung 8 während der Laufzeit $\Delta T_n$ mit der Winkelgeschwindigkeit $\omega$ weiter (punktiert dargestellt), so dass der Empfangs-Laserstrahl 4 beim Auftreffen auf der Strahlablenkeinrichtung 8 tatsächlich bereits einen anderen Ablenkwinkel $\alpha_2$ erfährt als zuvor der Sende-Laserstrahl 2, welcher den Ablenkwinkel $\alpha_1$ erfuhr. Dadurch unterliegt der Auftreffpunkt 10 des Empfangs-Laserstrahls 4 auf der Empfangsfläche 11 des Laserempfängers 12 einem Versatz $\Delta x$, der proportional dem Produkt aus Zielentfernung $D_n$ und Winkelgeschwindigkeit $\omega$ der Strahlablenkeinrichtung 8 ist, d.h.

$$\triangle x \; = \; f(D_n \cdot \omega) \qquad\qquad (2)$$

In der in Fig. 4 gezeigten Situation mit in der Zeichnungsebene liegenden Sende- und Empfangs-Laserstrahlen 2, 4 und einer normal zur Zeichnungsebene liegenden Drehachse 14 der Strahlablenkeinrichtung 8 liegt die Trajektorie, auf der sich der Auftreffpunkt 10 auf der Empfangsfläche 11 gemäß dem Versatz $\triangle x$ bewegt, auf einer Geraden in der Zeichnungsebene. Die tatsächliche Kurvenform der Trajektorie des Auftreffpunkts 10 auf der Empfangsfläche 11 hängt jedoch von den konkreten gegenseitigen geometrischen Beziehungen der Sende- und Empfangs-Laserstrahlen 2, 4, der Drehachse 14 der Strahlablenkeinrichtung 8 und der Lage der Spiegelfläche der Strahlablenkeinrichtung 8 zu ihrer Drehachse 14 ab; überdies sind auch Strahlablenkeinrichtungen 8 möglich, die gleichzeitig um mehr als eine Achse 14 rotieren und/oder schwingen. Fig. 5 zeigt daher den allgemein Fall einer beliebig gekrümmten Trajektorie 15, entlang der sich der Auftreffpunkt 10 des Empfangs-Laserstrahls 4 um den Versatz $\triangle x$ bewegt, und zwar ausgehend von einem Auftreffpunkt $10_0$ bei Stillstand der Ablenkeinrichtung 8 ($\omega = 0$) zu einem Auftreffpunkt $10_1$ in kleinerer Zielentfernung $D_n$ oder einem Auftreffpunkt $10_2$ in größerer Zielentfernung $D_n$ (bei konstanter Winkelgeschwindigkeit $\omega$).

Wenn die Winkelgeschwindigkeit $\omega$ der Strahlablenkeinrichtung 8 nicht konstant sondern zeitveränderlich ist, dann bewegt sich der Auftreffpunkt 10 auf der Empfangsfläche 11 entsprechend und im Rhythmus der Änderung der Winkelgeschwindigkeit $\omega(t)$. Bei einer zwei- oder mehrachsigen Bewegung der Strahlablenkeinrichtung 8 kann der Auftreffpunkt 10 bzw. seine Trajektorie 15 auch Schleifen, Lissajous-Figuren od.dgl. auf der Empfangsfläche 11 "zeichnen".

Bei konstanter Winkelgeschwindigkeit $\omega$ (bzw. bei einer entsprechender Kompensation um den Effekt einer sich verändernden Winkelgeschwindigkeit $\omega(t)$) kann somit aus Gleichung (2) von einem bestimmten Versatz $\triangle x$ auf eine bestimmte Zielentfernung $D_n$ rückgeschlossen werden bzw. fallen Zielentfernungen $D_n$ aus einem bestimmten Entfernungsmessbereich $G_1$, $G_2$, ... , allgemein $G_i$ (Fig. 1), auch in einen bestimmten Abschnitt ("Messfenster") $F_1$, $F_2$, ... , allgemein $F_i$, der Trajektorie 15 auf der Empfangsfläche 11. Dieser Effekt wird nun dazu ausgenützt, Zielreflexionen aus einem bestimmten Entfernungsmessbereich $G_i$ selektiv auszublenden, auszuwählen, abzuschwächen oder zu verstärken.

Zu diesem Zweck umfasst der Laserscanner 1 eine Auswahleinrichtung 16, welche dafür ausgebildet ist, die für die Messung des Empfangszeitpunktes $t_{E,n}$ eines Empfangsimpulses $E_n$ des Empfangs-Laserstrahls 4 verwendete Empfangsfläche 11 des Laserempfängers 12 auszuwählen, und zwar in Abhängigkeit der Winkelgeschwindigkeit $\omega$ bzw. $\omega(t)$ und des gewünschten Bereichs $G_i$ von messbaren Entfernungen $D_n$.

In einer ersten Ausführungsform der Auswahleinrichtung 16, die anhand der Fig. 4 bis 7 erläutert wird, hat der Laserempfänger 12 eine so große Empfangsfläche 11, dass sie jenen Bereich der Trajektorie 15 abdecken kann, in welchem die gewünschten Messfenster $F_i$ für die gewünschten Entfernungsmessbereiche $G_i$ liegen, und die Auswahleinrichtung 16 umfasst eine Blende 17, welche vor der Empfangsfläche 11 liegt und diese einschränkt bzw. begrenzt.

Fig. 4 zeigt schematisch eine Blende 17 mit einer einzigen Blendenöffnung 18, welche mittels eines Antriebs 19 relativ zur Empfangsfläche 11 des Laserempfängers 12 beweglich ist. Der Antrieb 19 kann von der Auswerteeinrichtung 13 oder einer anderen Steuereinrichtung entsprechend gesteuert werden, um die Lage der Blendenöffnung 18, damit des Messfensters $F_i$ und damit wiederum des Entfernungsmessbereichs $G_i$ des Laserscanners 1 auszuwählen.

Beispielsweise kann der Entfernungsmessbereich $G_i$ mit Hilfe der Auswahleinrichtung 16 so festgelegt werden, dass Störreflexionen von Zwischenzielen $U_n$', wie der Wolke 5, zur Gänze unterdrückt (ausgeblendet) werden, weil sie nicht mehr die Empfangsfläche 11 erreichen, sondern nur auf die opaken Bereiche der Blende 17 außerhalb der Blendenöffnung 18 treffen. Umgekehrt können so auch starke Bodenreflexionen wie jene der Bodenziele $U_n$ ausgeblendet werden, wenn der Entfernungsmessbereich $G_i$ auf den Entfernungsbereich der Wolke 5 gelegt wird. In letzterem Fall kann so die Empfindlichkeit des Laserempfängers 12 maximal gewählt werden, um die schwachen Zwischenziele $U_n$' der Wolke 5 zu messen, ohne eine Übersteuerung durch die starken Bodenreflexionen befürchten zu müssen.

Die Blende 17 kann dabei auch jeweils mehr als eine Blendenöffnung $18_1$, $18_2$ usw. haben, siehe Fig. 5, um gleichzeitig Ziele in mehr als einem Entfernungsmessbereich $G_i$ messen zu können, falls gewünscht.

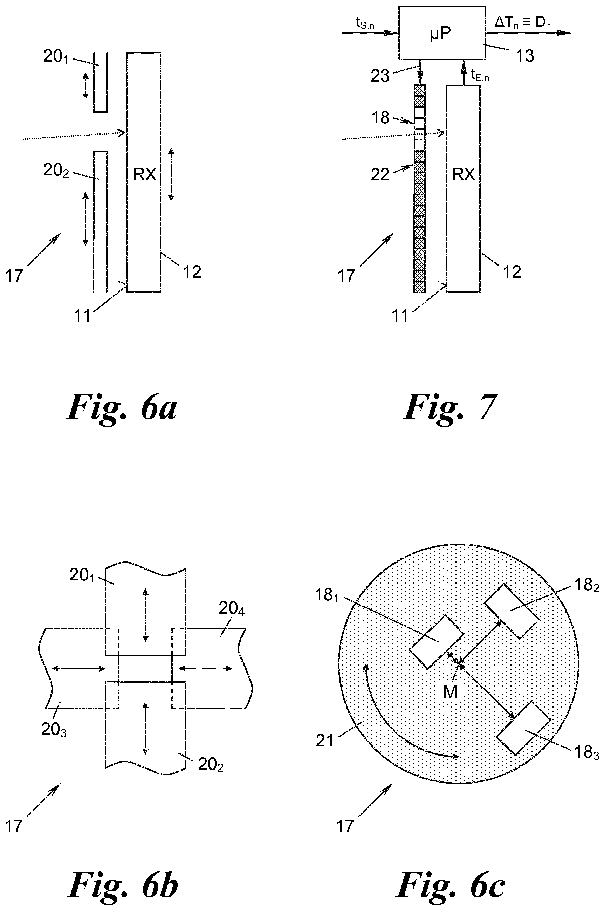

Die Fig. 6a bis 6c zeigen verschiedene mechanische Ausführungsformen der Blende 17 der Auswahleinrichtung 16. Gemäß den Fig. 6a und 6b hat die Blende 17 zwei oder mehr relativ zueinander bewegliche Lamellen $20_1$, $20_2$, $20_3$, $20_4$, die zwischeneinander die Blendenöffnung (en) 18, $18_1$, $18_2$,... und damit das oder die Messfenster $F_i$ für den Auftreffpunkt 10 entlang seiner Trajektorie 15 begrenzen. Die Lamellen $20_1$ - $20_4$ können wieder von einem oder mehreren Antrieben 19 bewegt werden. Fig. 6c zeigt eine weitere Ausführungsform der Blende 17 in Form einer um ihren Mittelpunkt M drehbaren Scheibe 21 mit mehreren Blendenöffnungen $18_1$, $18_2$, $18_3$, die wahlweise durch Verdrehen der Scheibe 21 vor die Trajektorie 15 (Fig. 5) gedreht werden können, um verschiedene Messfenster $F_i$ festzulegen.

Fig. 7 zeigt eine weitere Ausführungsform der Blende 17 in Form eines elektro-optischen Elements 22, dessen optische Transparenz für die hier interessierende Laser-Wellenlänge elektrisch steuerbar ist, beispielsweise von der Auswerteeinrichtung 13 oder einer gesonderten Elektronik her (siehe Pfeil 23). Die Veränderung der Transparenz des elektro-optischen Elements 22 kann global für das gesamte Element 22 oder lokal für kleine Segmente (Pixel) desselben erfolgen, wodurch auch komplex geformte, gegebenenfalls mehrfach unterteilte Blendenöffnungen 18, $18_1$, $18_2$, ... bzw. Messfenster $F_i$ vor der Empfangsfläche 11 errichtet werden können.

Bislang wurde die Blende 17 als sogenannte "Schwarzblende" betrachtet, bei welcher die Blendenöffnung (en) 18, $18_1$, $18_2$, ... zu 100% transparent (0% opak) und die übrigen Bereiche der Blende 17 zu 100% opak (0% transparent, "schwarz") sind. Es versteht sich jedoch, dass in jeder der hier beschriebenen Ausführungsformen die Blende 17 nicht nur eine 100%:0%-Blende (Schwarzblende) sein kann, sondern auch jedes beliebige andere Verhältnis von Transparenz zu Opazität haben kann, also ein Abschwächfilter mit Bereichen unterschiedlicher Transparenz bzw. Opazität sein kann.

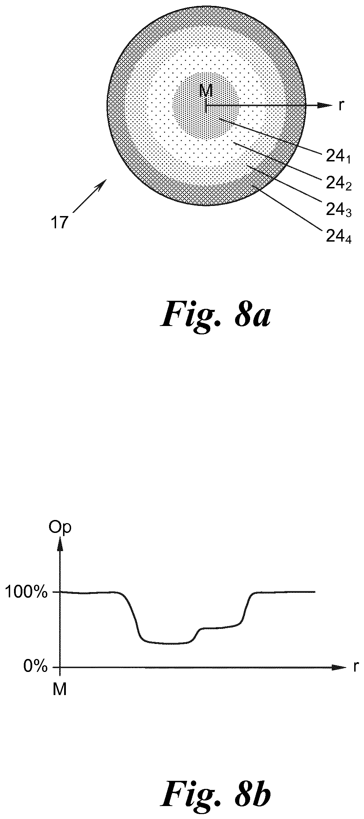

Die Fig. 8a und 8b zeigen eine solche Ausführungsform einer Blende 17 mit vier konzentrisch um ihren Mittelpunkt M angeordneten ringförmigen Bereichen $24_1$, $24_2$, $24_3$ und $24_4$, deren Opazität Op in Fig. 8b über dem Radius r ausgehend vom Mittelpunkt M aufgetragen ist. Mit einer solchen Abschwächfilter-Blende 17 können Empfangsimpulse $E_n$ aus unterschiedlichen Entfernungsmessbereichen $G_i$ des Laserscanners 1 unterschiedlich stark abgeschwächt werden, um beispielsweise Bodenreflexionen gegenüber Wolkenreflexionen abzuschwächen, wodurch der Laserempfänger 12 mit einer einheitlichen, maximalen Verstärkung bzw. Empfindlichkeit ohne die Gefahr einer Übersteuerung betrieben werden kann.

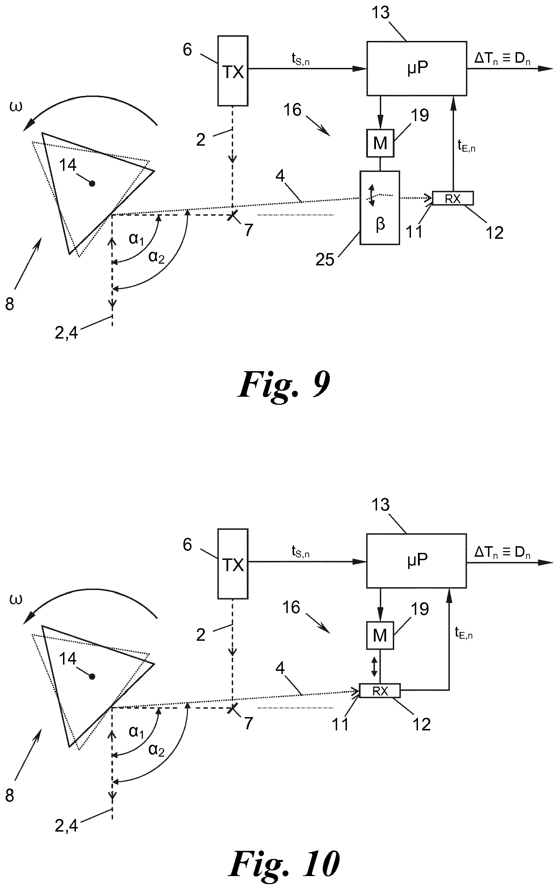

Bislang wurden Ausführungsformen der Auswahleinrichtung 16 beschrieben, bei denen eine vorgeordnete Blende 17 eine größere Empfangsfläche 11 des Laserempfängers 12 beschränkt. In alternativen Ausführungsformen der Auswahleinrichtung 16, die nun beschrieben werden, ist es jedoch auch möglich, dass die Auswahleinrichtung 16 die für die Messung verwendete Empfangsfläche 11 dadurch auswählt, dass ein kleinerer Laserempfänger 12 mit einer der Größe des gewünschten Messfenster $F_i$ entsprechenden Empfangsfläche 11 verwendet und zwecks Einstellung des Entfernungsmessbereichs $G_i$ entlang der Trajektorie 15 verstellt wird; umgekehrt kann auch der Empfangs-Laserstrahl 4 entlang der Trajektorie 15 relativ zu einem solchen kleineren Laserempfänger 12 verstellt werden. Die Fig. 9 bis 12 zeigen Ausführungsformen, die auf einer derartigen "kinematischen Umkehrung" des Prinzips der Fig. 4 bis 7 beruhen.

Fig. 9 zeigt eine erste Ausführungsform mit einem derartigen "kleinflächigen" Laserempfänger 12, dem eine Auswahleinrichtung 16 in Form einer vor der Empfangsfläche 11 liegenden weiteren Strahlablenkeinrichtung 25 vorgeschaltet ist. Die weitere Strahlablenkeinrichtung 25 ist beispielsweise ein justierbares Linsensystem oder Objektiv, das gegebenenfalls auch mit der Sammellinse bzw. Sammel-Optik 9 (Fig. 3) kombiniert sein kann. Die Strahlablenkeinrichtung 25 lenkt den Empfangs-Laserstrahl 4 um einen einstellbaren Ablenkwinkel $\beta$ ab, so dass nur Empfangsimpulse $E_n$ aus dem gewünschten Entfernungsmessbereich $G_i$ auf die dem Messfenster $F_i$ entsprechende Empfangsfläche 11 des Laserempfängers 12 gelangen können; Empfangsimpulse $E_n$ außerhalb des so ausgewählten Entfernungsmessbereichs $G_i$ verfehlen hingegen die kleine Empfangsfläche 11. Die weitere Strahlablenkeinrichtung 25 kann wieder von einem Antrieb 19 einstellbar sein, der von der Auswerteeinrichtung 13 oder einer anderen Elektronik gesteuert werden kann.

Fig. 10 zeigt eine alternative Variante des Prinzips von Fig. 9, bei welcher der gesamte Laserempfänger 12 mit seiner kleinen, dem ausgewählten Messfenster $F_i$ entlang der Trajektorie 15 entsprechenden Empfangsfläche 11 mittels des Antriebs 19 relativ zum Empfangs-Laserstrahl 4 bewegt wird, um wiederum den gewünschten Entfernungsmessbereich $G_i$ auszuwählen.

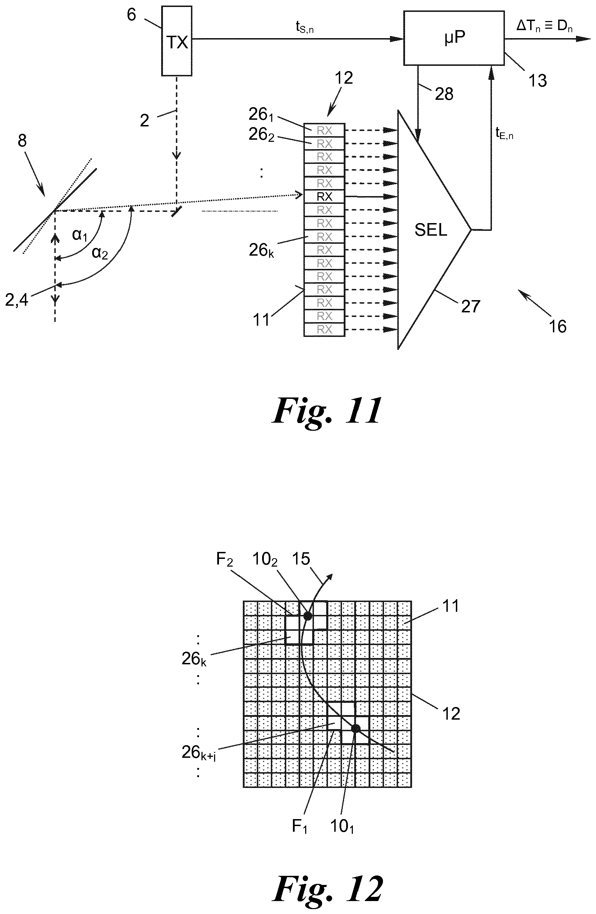

Fig. 11 zeigt noch eine weitere Ausführungsform der Auswahleinrichtung 16, bei der die Empfangsfläche 11 des Laserempfängers 12 in eine Vielzahl einzeln auswertbarer lichtempfindlicher Detektorelemente $26_1$, $26_2$, ..., allgemein $26_k$, unterteilt ist, welche an einen Selektor 27 angeschlossen sind. Der Selektor 27 wählt entsprechend dem/den gewünschten Messfenster(n) $F_i$ und damit Entfernungsmessbereich(en) $G_i$ das oder die jeweilige(n) Detektorelement(e) $26_k$ für die Messung des Empfangszeitpunktes $t_{E,n}$ aus. Der Selektor 27 kann wieder von der Auswerteeinrichtung 13 oder einer anderen Elektronik gesteuert werden (Pfeil 28).

Aus der Stirnansicht auf die Empfangsfläche 11 des Laserempfängers 12 von Fig. 12 kann ersehen werden, dass die Detektorelemente $26_k$ auch zweidimensional in Form eines 2D-Arrays angeordnet werden können, so dass durch entsprechende Auswahl einer oder mehrerer Detektorelemente $26_k$ in einem oder mehreren Bereichen auch komplexe, unregelmäßig geformte Messfenster $F_i$ entlang der Trajektorie 15 eingestellt werden können. Auch hier können wieder zwei oder mehr Messfenster $F_i$ definiert werden.

Durch entsprechende Steuerung der Empfindlichkeit der einzelnen Detektorelemente $26_k$ können auch Abschwächfilterverläufe analog den Fig. 8a und 8b über der Empfangsfläche 11 errichtet werden, um Empfangsimpulse $E_n$ aus verschiedenen Entfernungsmessbereichen $G_i$ unterschiedlich stark abzuschwächen oder zu verstärken.

Ein Array von Detektorelementen $26_k$, wie es in den Fig. 11 und 12 gezeigt ist, kann beispielsweise mit Hilfe einer Time-of-Flight-Kamera (ToF-Kamera) realisiert werden.

Es versteht sich, dass die Unterteilung der Empfangsfläche 11 des Laserempfängers 12 in einzelne Detektorelemente $26_k$ nicht notwendigerweise eine physische Unterteilung der Empfangsfläche 11 erfordert, sondern auch beispielsweise mit einem Laserempfänger 12 realisiert werden kann, welcher einen Messwert über die Position des Auftreffpunkts 10 auf seiner Empfangsfläche 11 liefert; dieser Messwert entspricht dann der Position des Detektorelements $26_k$. Eine Ausführungsform eines solchen Laserempfängers 12 ist beispielsweise eine fotoempfindliche Platte mit an den Enden oder ihrem Umfang angeschlossenen Elektroden, deren Messsignale von der Auswerteeinrichtung 13 und/oder dem Selektor 27 miteinander verglichen werden: Das Relativverhältnis der Ausgangsamplituden gibt dann Aufschluss über den Auftreffpunkt 10 auf der Empfangsfläche 11. Die genannte "Unterteilung" der Empfangsfläche 11 des Laserempfängers 12 in die Detektorelemente $26_k$ kann demgemäß auch auf diese Weise, gleichsam "analog" bzw. "kontinuierlich", realisiert werden.

Mit den in den Fig. 11 und 12 gezeigten Ausführungsformen der Auswahleinrichtung 16 kann die Auswahl der jeweils für die Vermessung verwendeten Empfangsfläche 11 des Laserempfängers 12 nicht nur vor oder während des Messvorgangs vorgenommen werden sondern sogar noch nachträglich, wenn die Messsignale der Detektorelemente $26_k$ aufgezeichnet werden. So kann beispielsweise eine Mehrzielsituation, wie sie in Fig. 1 gezeigt ist, also wenn ein Sendeimpuls $S_n$ zwei Empfangsimpulse $E_n$, $E_n'$ liefert, zu einem Ansprechen von Detektorelementen $26_k$, $26_{k+j}$ in zwei verschiedenen Messfenstern $F_i$ und damit Entfernungsmessbereichen $G_i$ führen, die parallel ausgewertet werden können. Der Laserscanner 1 wird so "mehrzielfähig" und kann z.B. gleichzeitig Wolken- und Bodenvermessungen durchführen.

Die Mehrzielfähigkeit des Laserscanners 1 kann in weiterer Folge auch dazu ausgenützt werden, Informationen über wolkenbedingte Zwischenziele $U_n'$ zur Korrektur der Vermessung der (Nutz-)Bodenziele $U_n$ zu verwenden. Beispielsweise kann aus Wolken-Zwischenzielen $U_n'$ auf atmosphärische Umgebungsbedingungen wie Luftverunreinigung, Luftfeuchtigkeit, Streuungseigenschaften usw. geschlossen werden, bis hin zur Erstellung eines Schichtenmodells der Atmosphäre. Derartige Umgebungsbedingungen haben einerseits Auswirkung auf die Laufzeiten $\Delta T_n$ zu den Bodenzielen $U_n$ und andererseits auf die Amplituden der von den Bodenzielen $U_n$ herrührenden Empfangs-Laserimpulse $E_n$. In Kenntnis des Ortes und/oder Reflexionsvermögens der Zwischenziele $U_n'$ und damit der Atmosphärenbedingungen können so beispielsweise die Laufzeiten $\Delta T_n$ im Hinblick auf die aktuelle Lichtgeschwindigkeit in der Atmosphäre und/oder eine atmosphärenbedingte Dämpfung der Amplituden der Empfangsimpulse $E_n$ kompensiert werden.

In jeder der oben beschriebenen Ausführungsformen kann der Entfernungsmessbereich $G_i$ mittels der Auswahleinrichtung 16 auch so eingestellt werden, dass jeweils nur Empfangsimpulse $E_n$ aus einer bestimmten MTA-Zone $Z_m$ berücksichtigt werden, um eine korrekte MTA-Zonenzuordnung zu ermöglichen. Der Laserscanner 1 wird dadurch MTA-zonenselektiv.

Ferner kann in jeder dieser Ausführungsformen die Auswerteeinrichtung 13 die Messfenster $F_i$ und damit Entfernungsmessbereiche $G_i$ für die Bestimmung der Entfernungsmesswerte $D_n$ (bzw. $D_n'$) zu einem bestimmten Ziel $U_n$ (bzw. $U_n'$) abhängig von einem oder mehreren früheren Entfernungsmesswerten $D_{n-1}$, $D_{n-z}$,... (bzw. $D_{n-1}'$, $D_{n-2}'$,...) berechnen und einstellen. Die Entfernungsmessbereiche $G_i$ können damit beispielsweise dem Verlauf der Landschaft 3 oder Wolken 5 adaptiv nachgeführt werden. Innerhalb des Spielraums einer MTA-Zonenbreite $d_{max}$ kann damit sogar eine automatische Anpassung des Entfernungsmessbereichs $G_i$ an eine jeweils interessierende MTA-Zone $z_m$ erreicht werden, so dass Echoimpulse aus anderen MTA-Zonen ("Geisterechos") unterdrückt werden bzw. unberücksichtigt bleiben, was eine automatische MTA-zonenselektive Messung ermöglicht.

Die Erfindung ist nicht auf die dargestellten Ausführungsformen beschränkt, sondern umfasst alle Varianten, Modifikationen und Kombinationen derselben, die in den Rahmen der angeschlossenen Ansprüche fallen. So kann der Laserscanner 1 insbesondere auch zwei oder mehr Lasersender 6 haben, die unter unterschiedlichen Winkeln auf die Strahlablenkeinrichtung 8 oder auf verschiedene Spiegelfacetten derselben zielen, und es können dementsprechend auch mehrere Auswahleinrichtungen 16 und Laserempfänger 12 vorgesehen werden. Auch ist es möglich, eine gemeinsame Auswahleinrichtung 16 und einen gemeinsamen Laserempfänger 12, gegebenenfalls mit mehreren Detektorelementen $26_k$, zu verwenden, welche aus den entsprechend mehrfachen Empfangs-Laserstrahlen 4 jeweils Entfernungsmessbereiche für die einzelnen Lasersender 6 in der beschriebenen Art und Weise auswählen.

**Patentansprüche**

1. Vorrichtung zur Entfernungsmessung eines Ziels durch Laufzeitmessung von daran reflektierten Laserimpulsen, umfassend:

    einen Lasersender (6) zum Aussenden eines Laserimpulses ($S_n$) zu einem Sendezeitpunkt ($t_{S,n}$) in Form eines Sende-Laserstrahls (2);
    einen Laserempfänger (12) zum Empfangen des am Ziel ($U_n$) reflektierten Laserimpulses ($E_n$) zu einem Empfangszeitpunkt ($t_{E,n}$) in Form eines Empfangs-Laserstrahls (4) auf einer Empfangsfläche (11) des Laserempfängers (12);
    eine dem Lasersender (6) nach- und dem Laserempfänger (12) vorgeordnete Strahlablenkeinrichtung (8), die die Sende- und Empfangs-Laserstrahlen (2, 4) mit einer bekannten Winkelgeschwindigkeit ($\omega$) ablenkt; und
    eine an den Lasersender (6) und den Laserempfänger (12) angeschlossene Auswerteeinrichtung (13) zum Messen der Laufzeit ($\Delta T_n$) zwischen Sende- und Empfangszeitpunkt ($t_{S,n}$, $t_{E,n}$) und daraus der Entfernung ($D_n$) des Ziels ($U_n$);

**gekennzeichnet durch**

eine Auswahleinrichtung (16), die dafür ausgebildet ist, die für die Messung verwendete Empfangsfläche (11) des Laserempfängers (12) in Abhängigkeit der Winkelgeschwindigkeit ($\omega$) und eines vorgegebenen Bereichs ($G_i$) von messbaren Entfernungen ($D_n$) auszuwählen.

2. Vorrichtung nach Anspruch 1, **gekennzeichnet durch** eine zwischen der Strahlablenkeinrichtung (8) und der Auswahleinrichtung (16) liegende Sammel-Optik (9).

3. Vorrichtung nach Anspruch 1 oder 2, **dadurch gekennzeichnet, dass** die Auswahleinrichtung (16) eine vor dem Laserempfänger (12) liegende Blende (17) umfasst, welche dessen Empfangsfläche (11) einschränkt.

4. Vorrichtung nach Anspruch 3, **dadurch gekennzeichnet, dass** die Blende (17) mittels eines Antriebs (19) relativ zum Laserempfänger (12) bewegbar ist.

5. Vorrichtung nach Anspruch 3, **dadurch gekennzeichnet, dass** die Blende (17) von einem Antrieb (19) gesteuerte Lamellen ($20_1$ - $20_4$) aufweist.

6. Vorrichtung nach Anspruch 3, **dadurch gekennzeichnet, dass** die Blende (17) eine von einem Antrieb (19) drehbare Scheibe (21) mit verschieden großen und/oder verschieden platzierten Blendenöffnungen ($18_1$ - $18_3$) aufweist.

7. Vorrichtung nach Anspruch 3, **dadurch gekennzeichnet, dass** die Blende (17) ein elektro-optisches Element (22) aufweist, dessen optische Transparenz elektrisch steuerbar ist, bevorzugt ein elektronisch steuerbares LCD-Panel.

8. Vorrichtung nach einem der Ansprüche 3 bis 7, **dadurch gekennzeichnet, dass** die Blende (17) eine Schwarzblende mit zumindest einer Blendenöffnung (18, $18_1$ - $18_3$) ist.

9. Vorrichtung nach einem der Ansprüche 3 bis 7, **dadurch gekennzeichnet, dass** die Blende (17) ein Abschwächfilter mit Bereichen ($24_1$ - $24_4$) unterschiedlicher Opazität ist.

10. Vorrichtung nach einem der Ansprüche 1 bis 9, **dadurch gekennzeichnet, dass** die Auswahleinrichtung (16) eine vor der Empfangsfläche (11) des Laserempfängers (12) liegende weitere Strahlablenkeinrichtung (25) umfasst.

11. Vorrichtung nach einem der Ansprüche 1 bis 10, **dadurch gekennzeichnet, dass** die Auswahleinrichtung (16) einen Antrieb (19) umfasst, mittels welchem der Laserempfänger (12) etwa parallel zu seiner Empfangsfläche (11) bewegbar ist.

12. Vorrichtung nach einem der Ansprüche 1 bis 11, **dadurch gekennzeichnet, dass** die Empfangsfläche (11) des Laserempfängers (12) in eine Vielzahl von lichtempfindlichen Detektorelementen ($26_k$) unterteilt und die Auswahleinrichtung (16) dafür ausgebildet ist, ein oder mehrere Detektorelemente ($26_k$) für die Messung auszuwählen.

13. Vorrichtung nach Anspruch 12, **dadurch gekennzeichnet, dass** die Auswahleinrichtung (16) dafür ausgebildet ist, zumindest zwei Detektorelemente ($26_k$, $26_{k+j}$) auszuwählen, und die Auswerteeinrichtung (13) dafür ausgebildet ist, eine erste Entfernung ($D_n$) aus dem Sendezeitpunkt ($t_{S,n}$) und einem vom ersten Detektorelement ($26_{k+j}$) gemessenen ersten Empfangszeitpunkt ($t_{E,n}$) und eine zweite Entfernung ($D_n$') aus dem Sendezeitpunkt und einem vom zweiten Detektorelement ($26_k$) gemessenen zweiten Empfangszeitpunkt ($t_{E,n}$') zu messen.

14. Vorrichtung nach Anspruch 12 oder 13, **dadurch gekennzeichnet, dass** die Detektorelemente ($26_k$) durch die Pixel einer Time-of-Flight-Kamera gebildet sind.

15. Vorrichtung nach einem der Ansprüche 1 bis 14, **dadurch gekennzeichnet, dass** der Lasersender (6) zumindest einen ersten und einen zweiten Laserimpuls ($S_{n-1}$, $S_n$) aussendet und die Auswahleinrichtung (16) dafür ausgebildet ist, die Empfangsfläche (11) für die Laufzeitmessung des zweiten Laserimpulses ($S_n$) auch in Abhängigkeit der Laufzeitmessung ($D_{n-1}$) des ersten Laserimpulses ($S_{n-1}$) auszuwählen.

16. Vorrichtung nach einem der Ansprüche 1 bis 15, **dadurch gekennzeichnet, dass** die Strahlablenkeinrichtung (8) eine sich zeitlich ändernde Winkelgeschwindigkeit ($\omega(t)$) hat und die Auswahleinrichtung (16) einen Messwert der Winkelgeschwindigkeit ($\omega(t)$) erhält, um die ausgewählte Empfangsfläche (11) an die zeitliche Änderung der Winkelgeschwindigkeit ($\omega(t)$) anzupassen.

**Claims**

1. Apparatus for distance measurement of a target by means of run time measurement of laser pulses reflected thereon, comprising:

   a laser emitter (6) for emitting a laser pulse ($S_n$) at a point in time of emitting ($t_{s,n}$) in the form of an emitted laser beam (2);
   a laser receiver (12) for receiving the laser pulse ($E_n$) reflected by the target ($U_n$) at a point in time of receiving ($t_{E,n}$) in form of a received laser beam (4) on a receiving surface (11) of the laser receiver (12);
   a beam deflection device (8), arranged downstream of the laser emitter (6) and upstream of the laser receiver (12), the beam deflection device (8) deflecting the emitted and received laser beams (2, 4) with a known angular velocity ($\omega$); and
   an evaluation device (13) connected to the laser emitter (6) and the laser receiver (12) for measuring the run time ($\Delta T_n$) between the points in time of emitting and receiving ($t_{S,n}$, $t_{E,n}$) and therefrom the distance ($D_n$) of the target ($U_n$) ;
   **characterized by**
   a selection device (16) configured for selecting the receiving area (11) of the laser receiver (12) used for measurement depending on the angular velocity ($\omega$) and a predetermined range ($G_i$) of measurable distances ($D_n$) .

2. Apparatus according to claim 1, **characterized by** a collecting optics (9) arranged between the beam deflection device (8) and the selection device (16).

3. Apparatus according to claim 1 or 2, **characterized in that** the selection device (16) comprises an aperture (17) lying in front of the laser receiver (12), which aperture (17) restricts the laser receiver's receiving area (11).

4. Apparatus according to claim 3, **characterized in that** the aperture (17) is movable relatively to the laser receiver (12) by means of a drive (19).

5. Apparatus according to claim 3, **characterized in that** the aperture (17) comprises lamellae ($20_1$ - $20_4$) controlled by a drive (19).

6. Apparatus according to claim 3, **characterized in that** the aperture (17) comprises a disk (21) with differently sized and/or differently placed aperture openings ($18_1$ - $18_3$), the disk (21) being rotatable by a drive (19).

7. Apparatus according to claim 3, **characterized in that** the aperture (17) comprises an electro-optical element (22), whose optical transparency is electrically controllable, preferably an electronically controllable LCD panel.

8. Apparatus according to any one of claims 3 to 7, **characterized in that** the aperture (17) is a black aperture with at least one aperture opening (18, $18_1$ - $18_3$).

9. Apparatus according to any one of claims 3 to 7, **characterized in that** the aperture (17) is an attenuation filter with areas ($24_1$ - $24_4$) of different opacity.

10. Apparatus according to any one of claims 1 to 9, **characterized in that** the selection device (16) comprises a further beam deflection device (25) lying in front of the receiving area (11) of the laser receiver (12).

11. Apparatus according to any one of claims 1 to 10, **characterised in that** the selection device (16) comprises a drive (19), by means of which the laser receiver (12) is movable substantially parallel to its receiving area (11).

12. Apparatus according to any one of claims 1 to 11, **characterised in that** the receiving area (11) of the laser receiver (12) is divided into a plurality of light-sensitive detector elements ($26_k$) and the selection device (16) is configured to select one or more detector elements ($26_k$) for the measurement.

13. Apparatus according to claim 12, **characterized in that** the selection device (16) is configured to select at least two detector elements ($26_k$, $26_{k+j}$), and the evaluation device (13) is configured to measure a first distance ($D_n$) from the point in time of emitting ($t_{S,n}$) and a first point in time of receiving ($t_{E,m}$), measured by the first detector element ($26_{k+j}$), and a second distance ($D_n'$) from the point in time of sending and a second point in time of receiving ($t_{E,n}'$),

measured by the second detector element ($26_k$).

14. Apparatus according to claim 12 or 13, **characterized in that** the detector elements ($26_k$) are composed of the pixels of a time-of-flight camera.

15. Apparatus according to any one of claims 1 to 14, **characterized in that** the laser emitter (6) emits at least a first and a second laser pulse ($S_{n-1}$, $S_n$) and the selection device (16) is configured to select the receiving area (11) for run time measurement of the second laser pulse ($S_n$) also depending on the run time measurement ($D_{n-1}$) of the first laser pulse ($S_{n-1}$).

16. Apparatus according to any one of claims 1 to 15, **characterized in that** the beam deflection device (8) has a time-varying angular velocity ($\omega(t)$) and the selection device (16) receives a measurement value of the angular velocity ($\omega(t)$) to adapt the selected receiving area (11) to the variation in time of the angular velocity ($\omega(t)$).

**Revendications**

1. Dispositif de mesure d'une distance d'une cible par la mesure d'un temps de parcours d'impulsions laser s'y étant réfléchies, comprenant :

   un émetteur laser (6) destiné à l'émission d'une impulsion laser ($S_n$) à un instant d'émission ($t_{S,n}$) sous la forme d'un rayonnement laser d'émission (2) ;
   un récepteur laser (12) destiné à la réception de l'impulsion laser ($E_n$) réfléchie sur la cible ($U_n$) à un instant de réception ($t_{E,n}$) sous la forme d'un rayonnement laser de réception (4) sur une surface de réception (11) du récepteur laser (12) ;
   un dispositif de déviation de faisceau (8) disposé en aval par rapport à l'émetteur laser (6) et en amont par rapport au récepteur laser (12), quel dispositif de déviation de faisceau (8) dévie les rayonnements laser d'émission et de réception (2, 4) avec une vitesse angulaire ($\omega$) connue ; et
   un dispositif d'évaluation (13) associé à l'émetteur laser (6) et au récepteur laser (12) destiné à la mesure du temps de parcours ($\Delta T_n$) entre les instants d'émission et de réception ($t_{S,n}$, $t_{E,n}$) et en déduire la distance ($D_n$) à la cible ($U_n$) ;
   **caractérisé par**
   un dispositif de sélection (16) qui est conçu pour choisir la surface de réception (11) du récepteur laser (12) employée pour la mesure en fonction de la vitesse angulaire ($\omega$) et d'une plage ($G_i$) prédéfinie de distances ($D_n$) mesurables.

2. Dispositif selon la revendication 1, **caractérisé par** un système optique de collecte (9) se situant entre le dispositif de déviation de faisceau (8) et le système de sélection (16) .

3. Dispositif selon la revendication 1 ou 2, **caractérisé en ce que** le dispositif de sélection (16) comprend un diaphragme (17) se situant avant le récepteur laser (12), quel diaphragme restreint la surface de réception (11) du récepteur laser (12).

4. Dispositif selon la revendication 3, **caractérisé en ce que** le diaphragme (17) peut se déplacer au moyen d'un système d'entraînement (19) par rapport au récepteur laser (12).

5. Dispositif selon la revendication 3, **caractérisé en ce que** le diaphragme (17) présente des lamelles ($20_1$ - $20_4$) commandées par un système d'entraînement (19).

6. Dispositif selon la revendication 3, **caractérisé en ce que** le diaphragme (17) présente un disque (21) mis en rotation par un système d'entraînement (19) avec des ouvertures de diaphragme ($18_1$ - $18_3$) de différentes tailles et/ou placées de manière différente.

7. Dispositif selon la revendication 3, **caractérisé en ce que** le diaphragme (17) présente un élément électro-optique (22) dont la transparence optique peut être commandée électriquement, de préférence, un panneau LCD pouvant être commandé électroniquement.

8. Dispositif selon l'une des revendications 3 à 7, **caractérisé en ce que** le diaphragme (17) est un diaphragme noir avec au moins un orifice de diaphragme (18, $18_1$ - $18_3$).

9. Dispositif selon l'une des revendications 3 à 7, **caractérisé en ce que** le diaphragme (17) est un filtre d'atténuation avec des zones ($24_1$ - $24_4$) d'opacité différente.

10. Dispositif selon l'une des revendications 1 à 9, **caractérisé en ce que** le dispositif de sélection (16) comprend un autre dispositif de déviation de faisceau (25) se situant avant la surface de réception (11) du récepteur laser (12).

11. Dispositif selon l'une des revendications 1 à 10, **caractérisé en ce que** le dispositif de sélection (16) comprend un système d'entraînement (19) au moyen duquel le récepteur laser (12) peut être déplacé à peu près parallèlement par rapport à sa surface de réception (11).

12. Dispositif selon l'une des revendications 1 à 11, **caractérisé en ce que** la surface de réception (11) du récepteur laser (12) est subdivisée en une multiplicité d'éléments détecteurs ($26_k$) photosensibles et le dispositif de sélection (16) est conçu pour choisir un ou plusieurs éléments détecteurs ($26_k$) pour la mesure.

13. Dispositif selon la revendication 12, **caractérisé en ce que** le dispositif de sélection (16) est conçu pour choisir au moins deux éléments détecteurs ($26_k$, $26_{k+j}$) et le dispositif de sélection (13) est conçu pour mesurer une première distance ($D_n$) à partir de l'instant d'émission ($t_{S,n}$) et un premier instant de réception ($t_{E,n}$) mesuré par le premier élément détecteurs ($26_{k+j}$) et une deuxième distance ($D_n$') à partir de l'instant d'émission et un deuxième instant de réception ($t_{E,n}$') mesuré par le deuxième élément détecteur ($26_k$).

14. Dispositif selon la revendication 12 ou 13, **caractérisé en ce que** les éléments détecteurs ($26_k$) sont formés par les pixels d'une caméra temps de vol.

15. Dispositif selon l'une des revendications 1 à 14, **caractérisé en ce que** l'émetteur laser (6) émet au moins une première et une deuxième impulsion laser ($S_{n-1}$, $S_n$) et le dispositif de sélection (16) est conçu pour choisir la surface de réception (11) pour la mesure du temps de parcours de la deuxième impulsion laser ($S_n$) également en fonction du temps de parcours ($D_{n-1}$) de la première impulsion laser ($S_{n-1}$).

16. Dispositif selon l'une des revendications 1 à 15, **caractérisé en ce que** le dispositif de déviation de faisceau (8) a une vitesse angulaire variant en fonction du temps ($\omega(t)$) et le dispositif de sélection (16) reçoit une valeur de mesure de la vitesse angulaire ($\omega(t)$) afin d'adapter la surface de réception (11) choisie à la variation de la vitesse angulaire variant avec le temps ($\omega(t)$).

*Fig. 1*

*Fig. 2*

*Fig. 3*

**Fig. 4**

**Fig. 5**

**Fig. 6a**

**Fig. 7**

**Fig. 6b**

**Fig. 6c**

**Fig. 8a**

**Fig. 8b**

**Fig. 9**

**Fig. 10**

Fig. 11

Fig. 12